# EUROPEAN PATENT SPECIFICATION

(11) **EP 3 587 499 B1**
(45) Date of publication and mention of the grant of the patent: **27.09.2023**
(21) Application number: 19176389.5
(22) Date of filing: 26.05.2016
(51) Int. Cl.: C08L 95/00, C08F 293/00, C08L 7/00, C08L 9/00, C08L 91/00, E01C 7/26, C08K 3/06, C08K 5/14

(54) **ASPHALT MODIFIER BASED ON A REACTIONPRODUCT OBTAINED FROM THERMOPLASTIC POLYMERS REACTED WITH BIORENEWABLE OILS**
ASPHALTMODIFIZIERER AUF BASIS EINES REAKTIONSPRODUKT VON THERMOPLASTICHEN POLYMEREN MIT BIOLOGISCH ERNEUERBAREN ÖLEN
MODIFICATEUR D'ASPHALTE BASÉ SUR UNE PRODUIT DE RÉACTION DE POLYMÈRES THERMOPLASTIQUES AVEC DES HUILES BIO-RENOUVELABLES

(30) Priority: 29.05.2015 US 201562168126 P
(43) Date of publication of application: 01.01.2020
(62) Divisional of application: 16804047.5
(73) Proprietor: Cargill, Incorporated, Wayzata, MN 55391 (US)
(72) Inventor: KURTH, Todd, Maple Grove, MN Minnesota 55311 (US); TABATABAEE, Hassan, Plymouth, MN Minnesota 55441 (US)
(74) Representative: Isarpatent

(56) References cited:
- EP-A1- 2 792 689
- US-A- 4 412 019
- US-A1- 2008 281 071
- US-A1- 2013 184 383
- LU Y ET AL: "Soybean oil-based, aqueous cationic polyurethane dispersions: Synthesis and properties", PROGRESS IN ORGANIC COATINGS, ELSEVIER BV, NL, vol. 69, no. 1, 1 September 2010 (2010-09-01), pages 31-37, XP027122749, ISSN: 0300-9440 [retrieved on 2010-05-23]
- LU Y ET AL: "Preparation and properties of starch thermoplastics modified with waterborne polyurethane from renewable resources", POLYMER, ELSEVIER SCIENCE PUBLISHERS B.V, GB, vol. 46, no. 23, 14 November 2005 (2005-11-14), pages 9863-9870, XP027727049, ISSN: 0032-3861 [retrieved on 2005-11-14]
- JIN ZHANG ET AL: "Formation of SBS triblock copolymers using waste soybean oil as coupling agent", JOURNAL OF APPLIED POLYMER SCIENCE, vol. 131, no. 17, 31 March 2014 (2014-03-31), pages n/a-n/a, XP055516151, ISSN: 0021-8995, DOI: 10.1002/app.40684
- Christopher R. Williams ET AL: "Development of Bio-Based Polymers for use in Asphalt, Final Report 2014", , 1 February 2014 (2014-02-01), pages 1-48, XP055516160, 800 Lincoln Way Ames, IA 50010 Retrieved from the Internet: URL:https://pdfs.semanticscholar.org/6492/ fa6f11c710bbbe0366c58b67e8e43283b10c.pdf [retrieved on 2018-10-17]

## Description

### TECHNICAL FIELD

This disclosure relates to an asphalt modifier, the use thereof, a modified asphalt and a method of making same.

### BACKGROUND

Recent technical challenges facing the asphalt industry have created opportunities for the introduction of agriculture-based products for the overall performance enhancement of asphalt. Although thermoplastic polymers and waxes have been used in asphalt as modifiers to improve various aspects of performance, interesting synergistic benefits from the use of composite modifiers containing thermoplastic polymers and bio-renewable oil based products can lead to useful performance enhancements. Such performance enhancements may include for example but aren't limited to expanding the useful temperature index (UTI) of asphalt, rejuvenating aged asphalt while improving durability and toughness, and compaction aid applications in which the product can be used to reduce the required compaction energy and/or haul distance of the asphalt loose mix from the plant to the job-site. US 4 412 019 A describes compositions comprising asphalt, rubber and sulfur. A thermoplastic elastomer composition and methods of making and using thereof are disclosed in US 2013/0184383 A1. Y. Lu et al. describe in Progress in Organic Coatings (2010), 69, 31-37 the synthesis and properties of soybean oil-based, aqueous cationic polyurethane dispersions. US 2008/0281071 A1 teaches a method for the cationic polymerization of unsaturated biological oils. Y. Lu et al. disclose in Polymer (2005), 46, 9863-9870 the preparation and properties of starch thermoplastics modified with waterborne polyurethane from renewable resources. J. Zhang et al. teach in Journal of Applied Polymer Science (2014), 131, 40684 the formation of SBS triblock copolymers using waste soybean oil as coupling agent. An oil extended functionalized styrene-butadiene copolymer is disclosed in EP 2 792 689 A1. C. R. Williams et al. describe in "Development of Bio-Based Polymers for use in Asphalt, Final Report 2014", Institute for Transportation, Iowa State University, 2014, pp. 1-48 the use of biopolymers as liquid asphalt modifiers.

### SUMMARY

Provided herein is an asphalt modifier, comprising a biorenewable oil and a thermoplastic polymer, wherein the thermoplastic polymer comprises about 1-75 wt% with a remaining balance of a biorenewable oil, wherein the biorenewable oil is soybean oil, wherein the biorenewable oil is at least partially sulfurized, and wherein the thermoplastic polymer is styrene-butadiene block copolymer.

Also provided herein is a modified asphalt for use in several asphalt end-use applications, comprising an asphalt binder in an amount ranging from about 60-99.9 wt%, and the asphalt modifier according to claim 1 in an amount ranging from about 0.1-40 wt%.

### FIGURES

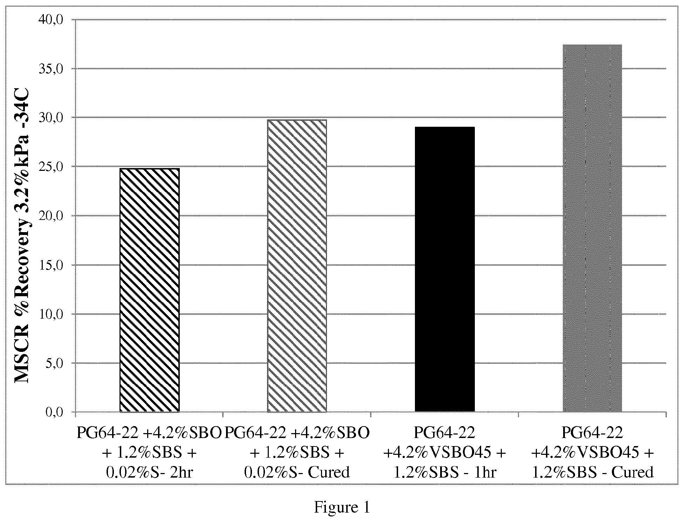

Figure 1 shows a comparison of the results of Example 1 in terms of percent of recoverable strain (%Recovery) after a 1 sec 3.2kPa creep loading using the Multiple Stress Creep and Recovery Procedure (MSCR) procedure after blending and after full curing for 12 hrs.

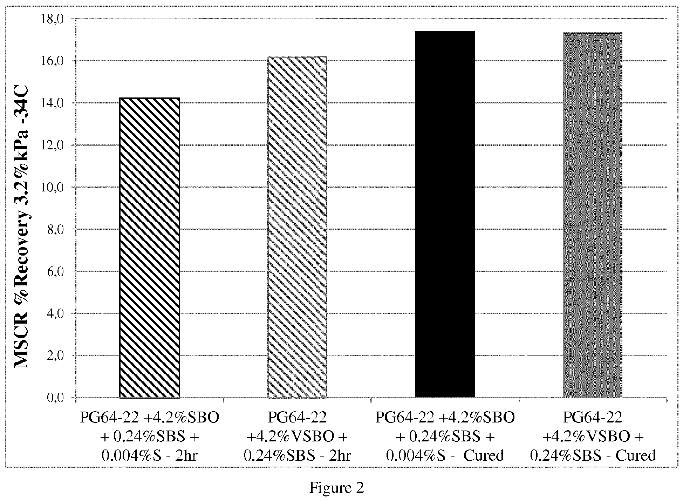

Figure 2 shows a comparison of the results of Example 2 in terms of percent of recoverable strain (%Recovery) after a 1 sec 3.2kPa creep loading using the Multiple Stress Creep and Recovery Procedure (MSCR) procedure after blending and after full curing for 12 hrs.

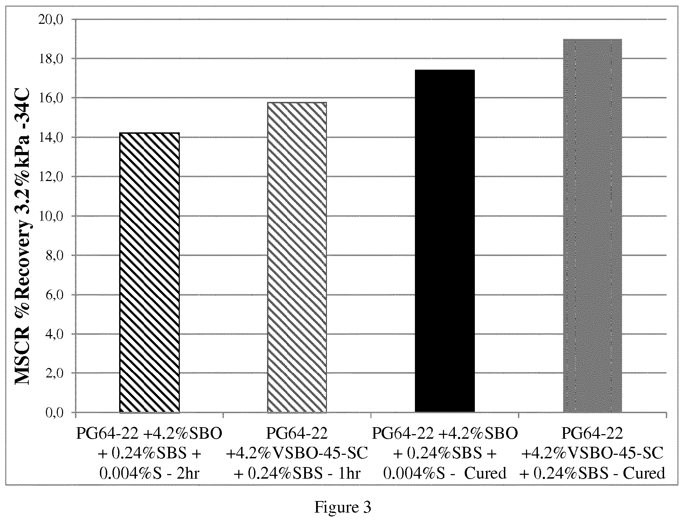

Figure 3 shows a comparison of the results of Example 3 in terms of percent of recoverable strain (%Recovery) after a 1 sec 3.2kPa creep loading using the Multiple Stress Creep and Recovery Procedure (MSCR) procedure after blending and after full curing for 12 hrs.

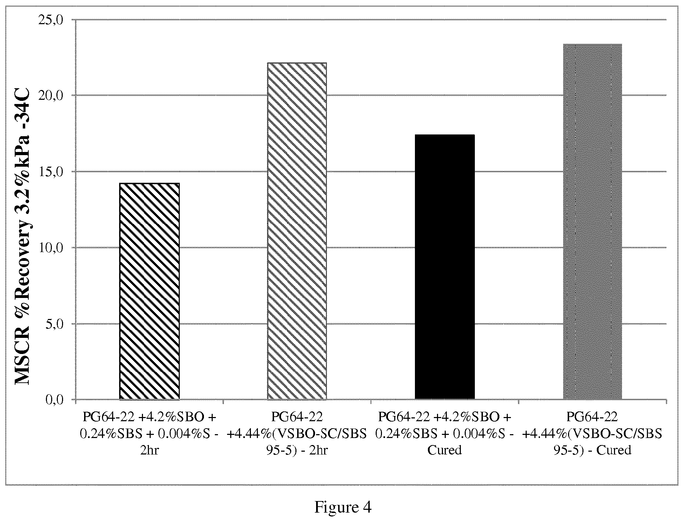

Figure 4 shows a comparison of the results of Example 4 in terms of percent of recoverable strain (%Recovery) after a 1 sec 3.2kPa creep loading using the Multiple Stress Creep and Recovery Procedure (MSCR) procedure after blending and after full curing for 12 hrs.

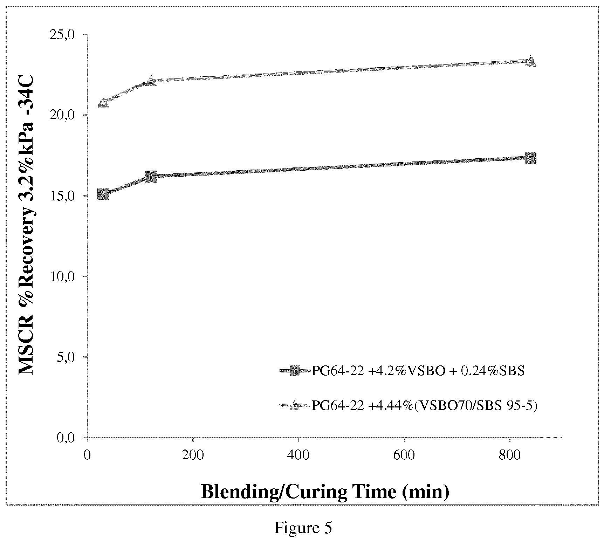

Figure 5 provides results of Example 4 in terms of percent of recoverable strain (%Recovery) after a 1 sec 3.2kPa creep loading using the Multiple Stress Creep and Recovery Procedure (MSCR) procedure, plotted against process time (Blending/Curing).

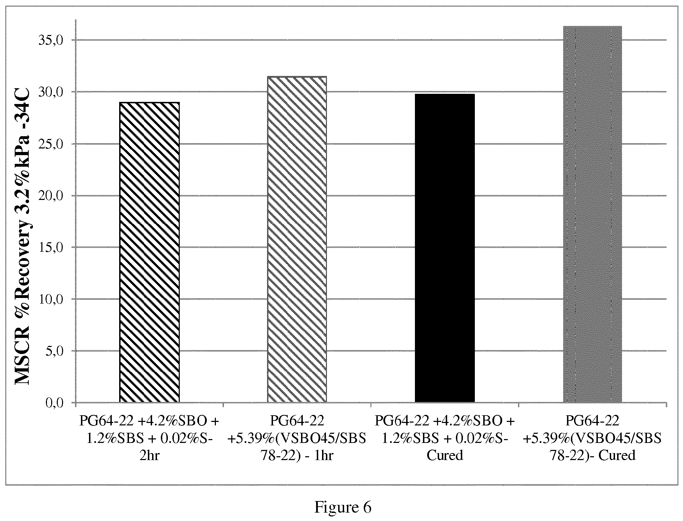

Figure 6 shows a comparison of the results of Example 5 in terms of percent of recoverable strain (%Recovery) after a 1 sec 3.2kPa creep loading using the Multiple Stress Creep and Recovery Procedure (MSCR) procedure after blending and after full curing for 12 hrs.

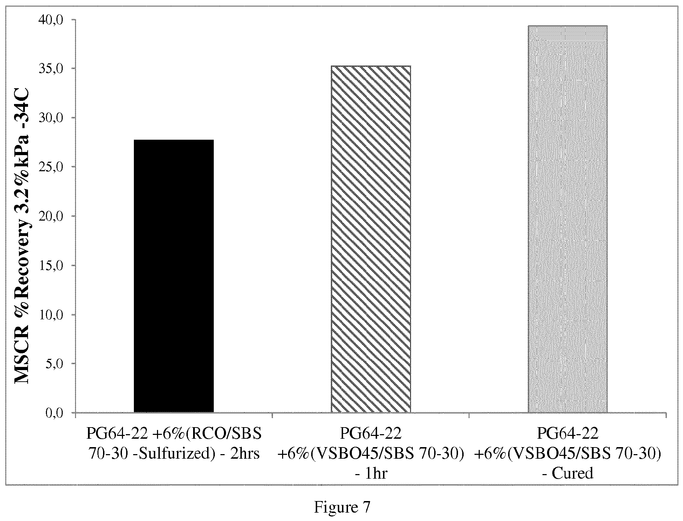

Figure 7 shows a comparison of the results of Example 6 in terms of percent of recoverable strain (%Recovery) after a 1 sec 3.2kPa creep loading using the Multiple Stress Creep and Recovery Procedure (MSCR) procedure after blending and after full curing for 12 hrs.

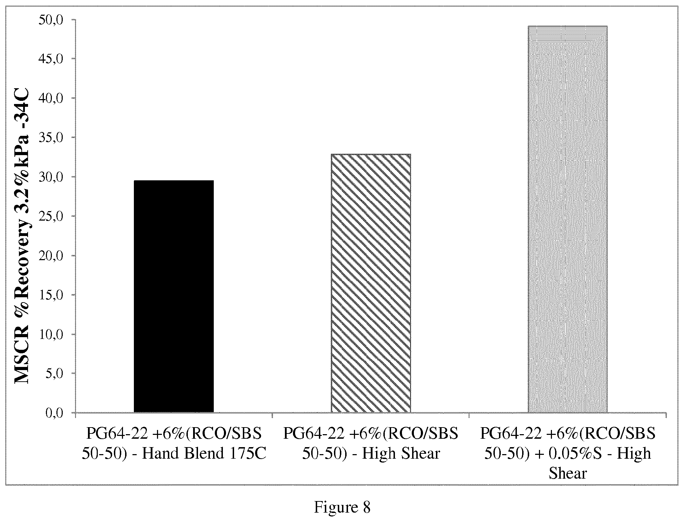

Figure 8 shows a comparison of the results of Example 7 in terms of percent of recoverable strain (%Recovery) after a 1 sec 3.2kPa creep loading using the Multiple Stress Creep and Recovery Procedure (MSCR) procedure after blending and after full curing for 12 hrs.
Figure 9 shows the specific heat of the asphalt modifier described in Example 8.
Figure 10 shows a plot of the complex modulus against temperature for asphalt modified with the asphalt modifiers described in Example 9. Results show three temperature ranges of asphalt performance in terms of modifier functionality and desired performance.
Figure 11 shows the specific heat of the asphalt modifier described in Example 10, measured using a Perkin Elmer DSC during a heating ramp at a fixed heating rate of 10°C/min.
Figure 12 shows a plot of the complex viscosity against temperature for asphalt modified with the asphalt modifiers described in Example 10.
Figure 13 shows a plot of the complex viscosity against temperature for asphalt modified with the asphalt modifiers described in Example 11.

### DETAILED DESCRIPTION

Aspects described herein provide an asphalt modifier system comprising a biorenewable oil and a thermoplastic polymer (also referred to herein as "asphalt modifier," a "blend," a "thermoplastic polymer and oil blend," a "modifier system", etc.). Methods of manufacturing the modifier system as well as its incorporation into asphalt, roofing, and coating applications are also described.

"Acid value" is defined as mass of potassium hydroxide needed in mg to neutralize one gram of sample according to AOCS Cd 3d-63. Acid value is a way of quantifying the amount of free fatty acid in a sample and has the units mg KOH/g.

"Amine value" is defined as the number of mg KOH equivalent to the basicity of one gram of test sample and has the units mg KOH/g.

"Oligomer" is defined as a polymer having a number average molecular weight (Mn) larger than 1000. A "monomer" makes up everything else and includes monoacylgyclerides (MAG), diacylglycerides (DAG), triacylglycerides (TAG), and free fatty acids (FFA).

"Reacted" blends refer to blends in which sulfur crosslinking and polymerization occurred prior to asphalt addition.

"Unreacted" blends refer to blends in which no sulfur crosslinking or polymerization occurred prior to asphalt addition.

Also, for purposes herein, it shall be understood that vulcanization and sulfurization are used herein interchangeably.

### Biorenewable Oil

Described, but not claimed per se, is that "biorenewable oils" can include oils isolated from plants, animals, and microorganisms including algae.

Examples of plant-based oils are soybean oil, linseed oil, canola oil, rapeseed oil, cottonseed oil, sunflower oil, palm oil, tall oil, peanut oil, safflower oil, corn oil, corn stillage oil (also known as recovered corn oil) and corresponding distillates and fatty acids, lecithin (phospholipids) and combinations and crude streams thereof or co-products, by-products, or residues resulting from oil refining processes.

Examples of animal-based oils may include but are not limited to animal fat (e.g., lard, tallow), and combinations and crude streams thereof.

Biorenewable oils can also include partially and fully hydrogenated oils, oils with conjugated bonds, and bodied oils wherein a heteroatom is not introduced, including, diacylglycerides, monoacylglycerides, free fatty acids, and alkyl esters of fatty acids (e.g., methyl, ethyl, propyl, and butyl esters).

Biorenewable oils can also include derivatives thereof, for example, previously modified, radically polymerized, polymerized, or functionalized oils (intentional or unintentional) wherein a heteroatom (oxygen, nitrogen, sulfur, and phosphorus) has been introduced may also be used as the starting oil material. Examples of unintentionally modified oils are used cooking oil, trap grease, brown grease, or other used industrial oils. Examples of previously modified oils are those that have been previously vulcanized or polymerized by other polymerizing technologies, such as maleic anhydride or acrylic acid modified, hydrogenated, dicyclopentadiene modified, conjugated via reaction with iodine, interesterified, or processed to modify acid value, hydroxyl number, or other properties. Such modified oils can be blended with unmodified plant-based oils or animal-based oils, fatty acids, glycerin, and/or gums materials.

The biorenewable oil according to the present invention is soybean oil. One skilled in the art will recognize that if higher functionality is desired, biorenewable oils having higher levels of unsaturation may be used. Conversely, higher saturates may be incorporated to further vary solvent parameters of the polymerized oils to improve performance properties in asphalt.

### Thermoplastic Polymer

Described, but not claimed per se, is that "thermoplastic polymers" may include polymers commonly classified as "elastomers" and "plastomers," pre-polymers (such as thermoplastic resins), oligomers, and high molecular weight polymers. According to the present invention, a styrene-butadiene block copolymer is used. Described, but not claimed per se, is that the thermoplastic polymer may be that which is contained in ground tire rubber (GTR). Examples of useful thermoplastic polymers are styrene, divinylbenzene, indene, or other vinyl aromatics, including styrene-based polymers such as styrene-butadiene-styrene (SBS) produced by Kraton and Dynasol, and emulsified or non-emulsified styrene-butadiene rubber; Reacted Elastomeric Terpolymers such as the Elvaloy^{™} RET produced by DuPont; and polyolefins such as polyethylene, polypropylene, and polybutylene, and functionalized polyolefin such as the Titan^{™} plastomer produced by Honeywell.

Described, but not claimed per se, is that "thermoplastic polymers" may also include waxes such as polyamide waxes that comprise a polyamine and a fatty acid, such as ethylene bistearamide and tristearamide.

### Asphalt Modifier System

The asphalt modifier system described herein comprises a blend of biorenewable oil and a thermoplastic polymer. Modifier systems in the prior art do not blend biorenewable oil with a thermoplastic polymer but rather directly add thermoplastic polymer to asphalt without additional materials or components. It has been found that the blend of the present invention and its composition accelerates dispersion and provides more uniformity when incorporated into asphalt, even with lower shearing and blending time requirements compared to that used in prior art systems.

In conventional polymer modified asphalt (the prior art), the asphalt is heated to temperatures often exceeding 180°C at which point the polymer is added to the asphalt at the desired dosage. Since the polymer is often provided in solid pellets, a lengthy high temperature and high shear blending period is required to homogeneously distribute the polymer in the asphalt. For many styrene-based elastomeric modifiers, a second step is included in the prior art during which a cross-linker such as peroxide or a sulfur containing compound is added to the blend and reacted for a few hours. Finally the asphalt along with the polymer continues to be heated for an additional 12-15 hours to ensure full curing of the polymer, during which the polymer swells through adsorption of lighter fractions in the asphalt.

The described modifier system herein provides a polymer with enhanced performance characteristics (in terms of elasticity and modulus) but with higher workability, and in some cases, lower melting points. This enables the use of a lower blending temperature, shorter blending times, and lower agitation levels if necessary. Furthermore, the composite thermoplastic polymer described herein often do not require lengthy "curing" periods to achieve equal or better performance characteristics than that of conventional thermoplastic polymers added using conventional methodology.

The blend of the present invention can be achieved through direct reaction of a thermoplastic polymeric material into a suitable, and in some aspects, reactive biorenewable oil. The blend comprises between about 1-75 wt% of a thermoplastic polymer with the remaining balance being biorenewable oil. The upper limit of the polymer is defined by the target end-use asphalt application. Lower thermoplastic polymer dosages are used in cases when the end-use application requires higher workability or reduction of production temperatures. Furthermore, depending on the end-use application, one may control the degree of incorporation of the biorenewable oil into the thermoplastic polymer. For example, in the case of asphalt modification, addition of the reactive polymerized biorenewable oils to the asphalt prior to addition of the thermoplastic polymer results in an in-situ polymerization and reaction in the asphalt. In other examples, the degree of crosslinking in the thermoplastic polymer may be manipulated by controlling the level of crosslinker incorporated into the crosslinked biorenewable oil. The following paragraphs describe various aspects of this invention.

Generally, the process to manufacture the asphalt modifier system of the present invention comprises first heating a biorenewable oil to a sufficiently high temperature. This temperature is in the range of 80 to 150°C for a suitable waxy or crystalline polymers or polyolefin (a suitable polyolefin will have a melting point above the pavement performance temperature range and below that of typical production temperatures). For amorphous polymers such as styrene based elastomers, the desired temperature will be at or higher than the glassy or rubbery transition, or a temperature sufficient enough to achieve a reduction in cohesive forces for efficient distribution in the oil medium. In cases where a reactive biorenewable oil is used, the temperature should be sufficiently high for the reactivity between the biorenewable oil and the thermoplastic polymer. The thermoplastic polymer is gradually added while maintaining the temperature of the blend and agitated until a uniform, homogenized distribution in the biorenewable oil medium is achieved.

Blending time is defined as the time required for homogenizing the polymer into the biorenewable oil. This will often occur within 1 hour without the need for high shear agitation. For polymers such as styrene-butadiene block copolymers, high shear blending may be used to accelerate the rate of polymer incorporation into the biorenewable oil, but is not required.

For polymers such as styrene-butadiene block copolymers, a period of high temperature curing may facilitate the swelling of the thermoplastic polymer through absorption of fractions in the biorenewable oil, resulting in improved elasticity and an increase in modulus, especially when used in asphalt end use applications.

Described, but not claimed per se, is that the thermoplastic polymer may have a high wax content or crystalline fraction. The wax has a melting temperature higher than typical asphalt end-use performance temperatures (usually about 80°C) but lower than typical production and construction temperatures (usually about 135°C). This leads to a reduction in viscosity in the end use application when it is heated beyond the melting point, enabling the reduction of required production and construction temperatures. Polyolefins such as polyethylene, polypropylene, and polybutylene are well suited.

In another aspect, the modifier system of the present invention may further include a crosslinking agent such as sulfur-containing compounds or peroxides added after the homogenization of the polymer in the biorenewable oil. Another crosslinking agent that may be used is a sulfur-containing compound in combination with a peroxide, polyphosphoric acid, and super acid catalysts.

The crosslinker may be fully or partially reacted with the thermoplastic polymer and the biorenewable oil, depending on the stage at which the crosslinker is added to the blend, and the reaction time. Fully crosslinking can provide a continuous network of the elastomeric polymers across the biorenewable oil medium that will lead to enhanced mechanical, rheological, and damage resistance properties as needed in asphalt applications and specifications.

In another aspect, the cross linker is added to the biorenewable oil before or at the time of the addition of the thermoplastic polymer.

In another aspect for asphalt applications, the crosslinker is not added to the oil and polymer reaction, but is instead added to the asphalt blend comprising the blend for an in-situ reaction with the thermoplastic polymer-oil blend. Sufficient blending temperatures and reaction time would be required for full reaction. Effectiveness of the reaction in asphalt is often assessed by measurement of the elasticity of the binder with a Dynamic Shear Rheometer, as shown in the examples.

In another aspect, a reactive biorenewable oil, preferably at least a partially sulfurized biorenewable oil may be used, which contains reactive sulfur when heated to sufficiently high temperatures (about 100 to 200°C, but preferably between 185 to 195°C). Addition of a thermoplastic polymer with sufficient unsaturation can lead to reaction with the reactive sulfur in the oil resulting in crosslinks of the reactive double bonds in the polymerized oil (may be in the free fatty acid, MAG, DAG, TAG, or any oligomer thereof), and the thermoplastic polymer as well as between molecules of the thermoplastic polymer. This will result in an extremely stable combined modifier system as well as improved mechanical, rheological, and damage resistance properties. Thermoplastic elastomers such as styrene-butadiene-styrene are well suited for such an application.

The reaction between the biorenewable oil, thermoplastic polymer, and optional crosslinking agent continues until desired physical properties are met. For asphalt modification, it is desired to maximize the elasticity (e.g. as measured using the DSR Multiple Stress Creep and Recovery procedure) by increasing the degree of polymerization, while maintaining the workability of the resulting thermoplastic polymer at temperatures lower than 190°C to enable efficient blending in the asphalt media which will place a limit on the desired degree of polymerization.

### Exemplary Embodiments

For a better understanding of the various embodiments described above, a few exemplary embodiments are hereinafter described. The most preferred aspect includes reacting vulcanized biorenewable oil (wherein the biorenewable oil is vulcanized using sulfur as described in co-pending provisional patent application number 62/126,064) with the thermoplastic polymer before incorporating the blend into asphalt. Another preferred aspect is incorporating the biorenewable oil and the thermoplastic polymer directly and individually (i.e., without reacting) into the asphalt and optionally incorporating a sulfur crosslinker thereafter. Another preferred aspect is incorporating both vulcanized biorenewable oil and the thermoplastic polymer directly and individually into asphalt wherein the vulcanized biorenewable oil acts as a cross-linker carrier.

As can be gleaned from the above description and the examples below, the asphalt modifier system - comprises a biorenewable oil that may be cationically polymerized using Bronsted acids and Lewis acids, including super acid catalysis, or sulfurization techniques. One of skill in the art will also realize that the use of natural oils, which consist of fatty acids possessing monounsaturated and polyunsaturated fatty acids, lead to the formation of hyperbranched polymers.

### End-Use Applications

For the purpose of this invention, asphalt, asphalt binder, and bitumen refer to the binder phase of an asphalt pavement. Bituminous material may refer to a blend of asphalt binder and other material such as aggregate or filler. The binder used in this invention may be material acquired from asphalt producing refineries, flux, refinery vacuum tower bottoms, pitch, and other residues of processing of vacuum tower bottoms and solvent de-asphalting processes, as well as oxidized and aged asphalt from recycled bituminous material such as reclaimed asphalt pavement (RAP), and recycled asphalt shingles (RAS).

In one aspect, the present invention provides a modified asphalt comprising a blend of 60 wt% to 99.9 wt% of asphalt binder and 0.1 wt% to 40 wt% of the asphalt modifier according to claim 1. The modified asphalt may be used for road paving or roofing applications. Additionally, modified asphalt can be used in a variety of industrial applications, not limited to coatings, drilling applications, and lubricants.

Other components, in addition to the asphalt modifier described in this invention, may be combined with the asphalt binder to produce a modified asphalt, for example but not limited to, thermoplastic elastomeric and plastomeric polymers (styrene butadiene styrene, emulsified or non-emulsified styrene-butadiene rubber, ethylene vinyl acetate, functionalized polyolefins, etc.), polyphosphoric acid, anti-stripping additives (amine-based, phosphate-based, etc.), warm mix additives, emulsifiers, and fibers. Typically, these components are added to the asphalt binder/polymerized oil at doses ranging from about 0.1 wt% to about 10 wt%.

### Asphalt Modification

The declining quality of bitumen drives the need for adding chemical modifiers to enhance the quality of asphalt products. Heavy mineral oils from petroleum refining are the most commonly used modifiers.

Mineral flux oils, petroleum-based crude distillates, and re-refined mineral oils have been used in attempts to soften the asphalt. Often, use of such material results in a decrease of the high temperature modulus of asphalt more than the low temperature, making the asphalt more prone of rutting at high temperatures. Such effects result in the reduction of the Useful Temperature Index (UTI).

Mineral flux oils, petroleum-based crude distillates, and re-refined mineral oils often have volatile fractions at pavement construction temperatures (e.g., 150 to 180°C), generally have lower flashpoints than that of asphalt, and may be prone to higher loss of performance due to oxidative aging.

The thermoplastic polymer and oil blends described herein are not only viable substitutes for mineral oil, but have also been shown to extend the UTI of asphalts to a greater degree than other performance modifiers, therefore providing substantial value to asphalt manufacturers. The observed increase in UTI using the blends described herein is a unique property not seen in other asphalt softening additives such as asphalt flux, fuel oils, products based on aromatic or naphthenic distillates, or flush oils. Typically one grade improvement in either the SHRP Performance Grading (PG) specification or the Penetration grading system used in many countries is achieved with approximately 2 to 3 wt% of the blend by weight of the asphalt. For example, the increase in UTI seen for approximately 3% by weight addition of the asphalt modifier can be as much as 4°C, therefore providing a broader PG modification range such that the lower end temperature can be lower without sacrificing the higher end temperature.

### Rejuvenation of Aged Bituminous Material

Asphalt "ages" through a combination of mechanisms, mainly oxidation and volatilization. Aging increases asphalt modulus, decreases viscous dissipation and stress relaxation, and increases brittleness at lower performance temperatures. As a result, the asphalt becomes more susceptible to cracking and damage accumulation. The increasing usage of recycled and reclaimed bituminous materials which contain highly aged asphalt binder from sources such as reclaimed asphalt pavements (RAP) and recycled asphalt shingles (RAS) have created a necessity for "rejuvenators" capable of partially or completely restoring the rheological and durability of the aged asphalt. The use of the thermoplastic polymer and oil blends described herein are particularly useful for RAP and RAS applications as they combine the rejuvenating effect of the oil component with the toughening effect of the thermoplastic polymer incorporated into the blend.

Accordingly, the thermoplastic polymer and oil blends described herein have been shown to be capable of rejuvenating and toughening the aged asphalt binder, and restoring the rheological properties of a lesser aged asphalt and enhancing the durability of the binder. As a result, small dosages of the blend can be used to incorporate high content of aged recycled asphalt material into pavements and other applications resulting in significant economic saving and possible reduction in the environmental impact of the pavement through reduction of use of fresh resources.

### Replacing Conventional Use of Thermoplastic Polymer in Asphalt

Asphalt is often modified with thermoplastic elastomeric and plastomeric polymers such as Styrene-Butadiene Styrene (SBS) as well as ground tire rubber to increase high temperature modulus and elasticity, to increase resistance to heavy loading and toughening the asphalt matrix against damage accumulation through repetitive loading, either through traffic on pavements, or environmental and thermal effects in roofing applications. Such polymers are usually used at 3 to 7 wt% dosages in the asphalt and can be as high as 20% for ground tire rubber.

Conventionally the polymer is high shear blended directly into asphalt at temperatures often exceeding 180°C and allowed to "cure" at similar temperatures during which the polymer swells by adsorption of lighter fractions in the asphalt until a continuous volume phase is achieved in the asphalt.

The volume phase of the fully cured polymer will be affected by degree of compatibility of the polymer in the asphalt and the fineness of the dispersed particles, resulting in an increased specific area and enhanced swelling potential through increase of the interface surface between asphalt and polymer.

The thermoplastic polymer and oil blends described herein can be added directly to the asphalt to achieve superior mechanical and rheological properties due to the higher polymer dispersion and compatibilization in the oil medium and consequently a more efficient network formation in the asphalt compared to the conventionally used thermoplastic polymers.

Furthermore, the thermoplastic polymer and oil blend does not require lengthy blending time or curing periods after adding to the asphalt to achieve and exceed the mechanical properties of asphalt blends made using the conventional polymer modification method described in above.

### Compaction Aid Additives for use in Asphalt

Asphalt pavements require a minimum amount of energy to be produced and compacted. This energy is provided through a combination of heat and mechanical energy through use of roller compactors. Thus additives allowing for reduction in the required compaction energy to achieve target mixture density can enable a reduction of the compactor passes or the temperature, thus enabling an increase in the maximum haul distance of the asphalt mixture from the plant to the job site.

The different mechanisms through which such compaction aid additives function may include increased lubrication of aggregates during asphalt mixture compaction, reduction of the binder viscosity at production temperatures, and better coating and wettability of the aggregates.

The thermoplastic polymer and oil blends described herein can be used as a compaction aid, to achieve a decrease in the required compaction energy through increase in aggregate lubrication and aggregate wettability, as well as decrease in viscosity at the higher temperatures used during construction when the thermoplastic polymer has a melting point in the range of 80 to 135°C (described, but not claimed per se, is that an example of which is a suitable polyolefin such as polyethylene, oxidized polyethylene, polypropylene, and polybutylene). In such an application the additive would be used at dosages preferably in the range of between about 0.1 and 2% by weight of the bitumen.

### EXAMPLES

For purposes herein, natural oil-based "oligomer" is defined as a polymer having a number average molecular weight (Mn) larger than 1000. A monomer makes up everything else and includes monoacylgyclerides (MAG), diacylglycerides (DAG), triacylglycerides (TAG), and free fatty acids (FFA). Molecular weight is determined using Gel Permeation Chromatography techniques.

Example 1: Use of Sulfurized Vegetable-Based Oil as Polymer Compatibilizer and Cross-Linker

Two polymer modified asphalt blends were compared, one in which elemental sulfur was added directly to the asphalt to cross link the SBS following a conventional asphalt polymer modification procedure (Blend A), and the other in which a sulfurized vegetable based oil with no cross linker was added to the asphalt before the addition of the SBS (Blend B).

The Multiple Stress Creep and Recovery procedure under AASHTO T350 is a procedure designed for measuring the Elasticity of asphalt binders through repeated 1 sec creep and 9 sec recovery steps. This procedure is especially useful for assessing the performance of polymer modified asphalt. Using the strain response from the creep and recovery steps a percent recovery (%R) is calculated as a measure of the ratio of the recoverable strain during the 9 sec recovery period to the total strain imposed by the end of the 1 sec creep step. By normalizing the strain at the end of the creep period to the imposed stress a compliance value can be measured (J). The compliance corresponding to the remaining strain at the end of the recovery period is referred to as the non-recoverable compliance (Jₙᵣ). An effective elastomeric modifier would increase the % Recovery and decrease the Jₙᵣ.

Blend A is a modified asphalt binder comprising:
- 94.58% neat asphalt binder graded as PG64-22 (PG 65.7-24.9) by weight of the blend.
- 4.2% of refined soy bean oil by weight of the blend.
- 1.2% of Styrene-Butadiene Styrene (Kraton D-1192) by weight of the blend.
- 0.02% of elemental sulfur by weight of the blend.

Blend B is a modified asphalt binder comprising:
- 94.6% neat asphalt binder graded as PG64-22 (PG 65.7-24.9) by weight of the blend.
- 4.2% of a polymerized vegetable-based oil, as described below:
   ∘ 60% by weight of a sulfurized refined soy bean oil reacted with 7.0% by weight of elemental sulfur at 175°C for 33 hrs under a Nitrogen sparge. This resulted in a modifier with 70.0% oligomers. It will be hereby referred to as VSB070.
   ∘ 40% by weight of refined soy bean oil
   ∘ Blend of VSBO70 and the unmodified oil had a 45% oligomer content. It will be hereby referred to as VSBO45.
- 1.2% of Styrene-Butadiene Styrene (Kraton D-1192) by weight of the blend.

Blending Procedure:
1. The oil was blended into the asphalt after the binder had been annealed at 150°C for 1 hour. The modified binder heated to about 193°C for polymer modification.
2. The RPM in the high shear mixer was set to 1000 while the SBS was added (within 1 minute). Immediately after addition of the polymer the RPM was briefly ramped up to 3000 rpm for approximately 10 minutes to insure full break down of the SBS pellets, after which the shear level was lowered to 1000 rpm.
3. Polymer blending was continued at 1000 rpm for a total of 2 hrs.
4. If a cross linker step is needed, the temperature was dropped to about 182°C at a 150 rpm at which point the sulfur cross linker was added. Blending was continued at 182°C and 150 rpm for 2 hrs.
5. Samples were taken from the Polymer modified binder before and after it was placed in an oven at 150°C for curing for approximately 12 hrs (overnight) to achieve full swelling of the polymer.

Performance grade tests were performed in accordance to AASHTO M320. Multiple Stress Creep and Recovery tests were performed on the unaged binder at 34°C in accordance to AASHTO T350. Details are shown in Table 1:

**Table 1**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +4.2%SBO + 1.2%SBS + 0.02%S | Yes | No | 4 hours | 0.22 | 0.15 | 24.78 |
| | Yes | Yes | | 0.22 | 0.122 | 29.72 |
| PG64-22 +4.2%VSBO45 + 1.2%SBS | **No** | No | 1 hour | 0.22 | 0.128 | 28.97 |
| | **No** | Yes | | 0.22 | 0.105 | 37.44 |

The results show that not only did use of the sulfurized vegetable based oil eliminate the need for a cross-linker by delivering superior elasticity and compliance at the conclusion of blending, it also developed a more efficient and higher elasticity elastomeric polymer compared to the binder that did not contain the sulfurized modifier at the conclusion of the curing step. This can significantly simplify the modification process for the end user, as handling of elemental sulfur and addition of a cross-linking step in unnecessary. As a result of eliminating the crosslinking step the blend time was significantly reduced from 4 hrs to 1 hr.

By comparing the results of Blend B to that of the conventional blend (Blend A) it is observed that the use of the reactive sulfurized oil eliminated the need for the 12 hr curing period by delivering nearly equal performance after only 1 hr of blending.

### Example 2: Use of sulfurized vegetable-based oil as polymer compatibilizer and cross-linker:

Two polymer modified asphalt blends were compared, one in which elemental sulfur was added directly to the asphalt to cross link the SBS following a conventional asphalt polymer modification procedure (Blend A), and the other in which a sulfurized vegetable based oil with no cross linker was added to the asphalt before addition of the polymer (Blend B).

Blend A is a modified asphalt binder comprising:
- 95.56% neat asphalt binder graded as PG64-22 (PG 65.7-24.9) by weight of the blend.
- 4.2% of refined soy bean oil by weight of the blend.
- 0.24% of Styrene-Butadiene Styrene (Kraton D-1192) by weight of the blend.
- 0.004% of elemental sulfur by weight of the blend.

Blend B is a modified asphalt binder comprising:
- 95.56% neat asphalt binder graded as PG64-22 (PG 65.7-24.9) by weight of the blend.
- 4.2% of a sulfurized refined soy bean oil reacted with 7.0% by weight of elemental sulfur at 175°C for 33 hrs under a Nitrogen sparge. This resulted in a modifier with 70.0% oligomers. It will be hereby referred to as VSB070.
- 0.24% of Styrene-Butadiene Styrene (Kraton D-1192) by weight of the blend.

Blending Procedure:
1. The oil was blended into the asphalt after the binder had been annealed at 150°C for 1 hour. The modified binder heated to about 193°C for polymer modification.
2. The RPM in the high shear mixer was set to 1000 while the SBS was added (within 1 minute). Immediately after addition of the polymer the RPM was briefly ramped up to 3000 rpm for approximately 10 minutes to insure full break down of the SBS pellets, after which the shear level was lowered to 1000 rpm.
3. Polymer blending was continued at 1000 rpm for a total of 2 hrs.
4. If a cross linker step is needed, the temperature was dropped to about 182°C at a 150 rpm at which point the sulfur cross linker was added. Blending was continued at 182°C and 150 rpm for 2 hrs.
5. Samples were taken from the Polymer modified binder before and after it was placed in an oven at 150°C for curing for approximately 12hrs (overnight) to achieve full swelling of the polymer.

Performance grade tests were performed in accordance to AASHTO M320. Multiple Stress Creep and Recovery tests were performed on the unaged binder at 34°C in accordance to AASHTO T350. Details are shown in Table 2:

**Table 2**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +4.2%SBO + 0.24%SBS + 0.02%S | Yes | No | 4 hours | 0.05 | 0.21 | 14.23 |
| | Yes | Yes | | 0.05 | 0.17 | 17.40 |
| PG64-22 +4.2%VSBO70 + 0.24%SBS | **No** | No | 2 hour | 0.05 | 0.15 | 16.18 |
| | **No** | Yes | | 0.05 | 0.13 | 17.35 |

The results show that use of the sulfurized vegetable based oil eliminate the need for a cross-linker by delivering equal elasticity and performance at the conclusion of blending and curing, thus significantly simplifying the modification process for the end user. Furthermore, as a result of eliminating the crosslinking step the blend time was significantly reduced from 4 hrs to 2 hr.

### Example 3: Use of sulfurized vegetable-based oil as polymer compatibilizer and cross-linker:

Two polymer modified asphalt blends were compared, one in which elemental sulfur was added directly to the asphalt to cross link the SBS following a conventional asphalt polymer modification procedure (Blend A), and the other in which a sulfurized vegetable based oil while no cross linker was added to the asphalt before the addition of the polymer (Blend B).

Blend A is a modified asphalt binder comprising:
- 95.56% neat asphalt binder graded as PG64-22 (PG 65.7-24.9) by weight of the blend.
- 4.2% of refined soy bean oil by weight of the blend.
- 0.24% of Styrene-Butadiene Styrene (Kraton D-1192) by weight of the blend.
- 0.004% of elemental sulfur by weight of the blend.

Blend B is a modified asphalt binder comprising:
- 95.56% neat asphalt binder graded as PG64-22 (PG 65.7-24.9) by weight of the blend.
- 4.2% of a polymerized vegetable-based oil (containing 0.0018% sulfur by weight of the asphalt), as described below:
   o 60% by weight of a sulfurized refined soy bean oil reacted with 7.0% by weight of elemental sulfur at 175°C for 33 hrs under a Nitrogen sparge. This resulted in a modifier with 70.0% oligomers. It will be hereby referred to as VSB070.
   ∘ 40% by weight of refined soy bean oil
   o Blend of VSBO70 and the unmodified oil had a 45% oligomer content. It will be hereby referred to as VSBO45.
- 0.24% of Styrene-Butadiene Styrene (Kraton D-1192) by weight of the blend.

Blending Procedure:
1. The oil was blended into the asphalt after the binder had been annealed at 150°C for 1 hour. The modified binder heated to about 193°C for polymer modification.
2. The RPM in the high shear mixer was set to 1000 while the SBS was added (within 1 minute). Immediately after addition of the polymer the RPM was briefly ramped up to 3000 rpm for approximately 10 minutes to insure full break down of the SBS pellets, after which the shear level was lowered to 1000 rpm.
3. Polymer blending was continued at 1000 rpm for a total of 2 hrs.
4. If a cross linker step is needed, the temperature was dropped to about 182°C at a 150 rpm at which point the sulfur cross linker was added. Blending was continued at 182°C and 150 rpm for 2 hrs.
5. Samples were taken from the Polymer modified binder before and after it was placed in an oven at 150°C for curing for approximately 12- hrs (overnight) to achieve full swelling of the polymer.

Performance grade tests were performed in accordance to AASHTO M320. Multiple Stress Creep and Recovery tests were performed on the unaged binder at 34°C in accordance to AASHTO T350. Details are shown in Table 3:

**Table 3**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +4.2%SBO + 0.24%SBS + 0.02%S | Yes | No | 4 hours | 0.05 | 0.21 | 14.23 |
| | Yes | Yes | | 0.05 | 0.17 | 17.40 |
| PG64-22 +4.2%VSBO45 + 0.24%SBS | **No** | No | 1 hour | 0.05 | 0.16 | 15.76 |
| | **No** | Yes | | 0.05 | 0.12 | 19.01 |

The results show that use of the sulfurized vegetable based oil eliminated the need for a cross-linker by delivering a superior elasticity and performance at the conclusion of blending. Furthermore, the total sulfur present in the sulfurized vegetable oil (of which only a fraction is reactive at the blend conditions) was less than half of the elemental sulfur crosslinker added to the asphalt in Blend A, thus highlighting the much higher efficiency in crosslinking achieved when the sulfurized oil is used as a replacement for use of elemental sulfur as a crosslinker.

The results also signify that the use of the sulfurized oil developed a more efficient and higher elasticity elastomeric polymer compared to the binder that did not contain the sulfurized modifier at the conclusion of the curing step. Furthermore, as a result of eliminating the crosslinking step the blend time was significantly reduced from 4 hrs to 1 hr.

### Example 4: Use of Reacted Vegetable-based Thermoplastic Polymer based on Soybean Oil #1:

Two polymer modified asphalt blends were compared, one in which elemental sulfur was added directly to the asphalt to cross link the SBS following a conventional asphalt polymer modification procedure (Blend A), and the other in which a reacted SBS-vegetable based oil blend was used as a thermoplastic polymer replacement and the only additive (Blend B).

Blend A is a modified asphalt binder comprising:
- 95.56% neat asphalt binder graded as PG64-22 (PG 65.7-24.9) by weight of the blend.
- 4.2% of refined soy bean oil by weight of the blend.
- 0.24% of Styrene-Butadiene Styrene (Kraton D-1192) by weight of the blend.
- 0.004% of elemental sulfur by weight of the blend.

Blend B is a modified asphalt binder comprising:
- 95.56% neat asphalt binder graded as PG64-22 (PG 65.7-24.9) by weight of the blend.
- 4.44% of a reacted thermoplastic polymer blend (containing 0.0029% sulfur by weight of the asphalt), as described below:
   ∘ 95% by weight of a sulfurized refined soy bean oil reacted with 7.0% by weight of elemental sulfur at 175°C for 33 hrs under a Nitrogen sparge. This resulted in a modifier with 70.0% oligomers (VSBO70).
   ∘ 5% by weight of Styrene-Butadiene Styrene (Kraton D-1192)
   ∘ The VSBO70 was heated to 195°C under light agitation at which point the D-1192 SBS was gradually added and continued to be reacted for 60 minutes after which the reacted blend was cooled.

Blending Procedure:
1. The oil was blended into the asphalt after the binder had been annealed at 150°C for 1 hour. The modified binder heated to about 193°C for polymer modification.
2. The RPM in the high shear mixer was set to 1000 while the SBS was added (within 1 minute). Immediately after addition of the polymer the RPM was briefly ramped up to 3000 rpm for approximately 10 minutes to insure full break down of the SBS pellets, after which the shear level was lowered to 1000 rpm.
3. Polymer blending was continued at 1000 rpm for a total of 2 hrs.
4. If a cross linker step is needed, the temperature was dropped to about 182°C at a 150 rpm at which point the sulfur cross linker was added. Blending was continued at 182°C and 150 rpm for 2 hrs.
5. Samples were taken from the Polymer modified binder before and after it was placed in an oven at 150°C for curing for approximately 12hrs (overnight) to achieve full swelling of the polymer.

Multiple Stress Creep and Recovery tests were performed on the unaged binder at 34°C in accordance to AASHTO T350. Details are shown in Table 4:

**Table 4**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +4.2%SBO + 0.24%SBS + 0.02%S | Yes | No | 4 hours | 0.05 | 0.21 | 14.23 |
| | Yes | Yes | | 0.05 | 0.17 | 17.40 |
| PG64-22 +4.44%(VSBO70-SBS 95:5) | **No** | No | 1 hour | 0.05 | 0.10 | 22.14 |
| | **No** | Yes | | 0.05 | 0.09 | 23.38 |

The results show a significant increase in elasticity and creep stiffness (reduction in creep compliance) with the use of the reacted vegetable oil-SBS thermoplastic polymer in place of conventional SBS modification, even though the SBS content of the asphalt binders remained unchanged. Furthermore, use of the reacted vegetable oil-SBS thermoplastic polymer eliminated the need for addition of a cross-linker. This can significantly improve and simplify the modification process for the end user, as the use of three additives (oil, SBS, and sulfur) is reduced to a single step modification with enhanced performance that required less than half of the blend time of the conventional blends (1 hrs instead of 4 hrs).

### Example 5: Use of Reacted Vegetable-based Thermoplastic Polymer based on Soybean Oil #2:

Two polymer modified asphalt blends were compared, one in which elemental sulfur was added directly to the asphalt to cross link the SBS following a conventional asphalt polymer modification procedure (Blend A), and the other in which a reacted SBS-vegetable based oil blend was used as a thermoplastic polymer replacement and the only additive (Blend B).

Blend A is a modified asphalt binder comprising:
- 94.58% neat asphalt binder graded as PG64-22 (PG 65.7-24.9) by weight of the blend.
- 4.2% of refined soy bean oil by weight of the blend.
- 1.2% of Styrene-Butadiene Styrene (Kraton D-1192) by weight of the blend.
- 0.02% of elemental sulfur by weight of the blend.

Blend B is a modified asphalt binder comprising:
- 94.6% neat asphalt binder graded as PG64-22 (PG 65.7-24.9) by weight of the blend.
- 5.4% of a reacted thermoplastic polymer blend (containing 0.0018% sulfur by weight of the asphalt), as described below:
   ∘ 78% by weight of a sulfurized refined soy bean oil reacted with 7.0% by weight of elemental sulfur at 175°C for 33 hrs under a Nitrogen sparge. This resulted in a modifier with 70.0% oligomers, blended back with refined SBO to a 45% oligomer content (VSBO45).
   ∘ 22% by weight of Styrene-Butadiene Styrene (Kraton D-1192)
   ∘ The VSBO45 was heated to 195°C under light agitation at which point the D-1192 SBS was gradually added and continued to be reacted for 60 minutes after which the reacted blend was cooled.

Blending Procedure:
1. The oil was blended into the asphalt after the binder had been annealed at 150°C for 1 hour (Blend A only). The modified binder heated to about 193°C for polymer modification.
2. The RPM in the high shear mixer was set to 1000 while the SBS was added (within 1 minute). Immediately after addition of the polymer the RPM was briefly ramped up to 3000 rpm for approximately 10 minutes to insure full break down of the SBS pellets, after which the shear level was lowered to 1000 rpm.
3. Polymer blending was continued at 1000 rpm for a total of 2 hrs.
4. If a cross linker step is needed, the temperature was dropped to about 182°C at a 150 rpm at which point the sulfur cross linker was added. Blending was continued at 182°C and 150 rpm for 2 hrs.
5. Samples were taken from the Polymer modified binder before and after it was placed in an oven at 150°C for curing for approximately 12 hrs (overnight) to achieve full swelling of the polymer.

Performance grade tests were performed in accordance to AASHTO M320. Multiple Stress Creep and Recovery tests were performed on the unaged binder at 34°C in accordance to AASHTO T350. Details are shown in Table 5:

**Table 5**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +4.2%SBO + 1.2%SBS + 0.02%S | Yes | No | 4 hours | 0.22 | 0.128 | 28.97 |
| | Yes | Yes | | 0.22 | 0.122 | 29.72 |
| PG64-22 +5.4%(VSBO45-SBS 78:22) | **No** | No | 1 hour | 0.22 | 0.10 | 27.40 |
| | **No** | Yes | | 0.22 | 0.08 | 32.81 |

The results show a significant increase in elasticity and creep stiffness (reduction compliance) with the use of the reacted vegetable oil-SBS thermoplastic polymer in place of conventional SBS modification, even though the SBS content of the asphalt binders remained unchanged. Furthermore, use of the reacted vegetable oil-SBS thermoplastic polymer eliminated the need for addition of a cross-linker. This can significantly improve and simplify the modification process for the end user, as the use of three additives (oil, SBS, and sulfur) is reduced to a single step modification with enhanced performance that only required less than half of the blend time of conventional blends.

### Example 6: Comparison of Reacted Vegetable-based Thermoplastic Polymers:

Two polymer modified asphalt blends were compared in which unreacted and reacted SBS-vegetable based oil blend was used as a thermoplastic polymer replacement and the only additive (Blends A and B).

Blend A is a modified asphalt binder comprising:
- 94.0% neat asphalt binder graded as PG64-22 (PG 65.7-24.9) by weight of the blend.
- 6% of a reacted thermoplastic polymer blend, as described below:
   ∘ 70% by weight of RCO.
   ∘ 30% by weight of Styrene-Butadiene Styrene (Kraton D-1192)
   ∘ The RCO was heated to 195°C under light agitation at which point the D-1192 SBS was gradually added and continued to be agitated until a uniform blend was achieved (approximately 15-30 minutes). At this point the elemental sulfur was added at the equivalent of 1/60 of the SBS content for 60 minutes, after which the reacted blend was cooled.

Blend B is a modified asphalt binder comprising:
- 94.0% neat asphalt binder graded as PG64-22 (PG 65.7-24.9) by weight of the blend.
- 6% of a reacted thermoplastic polymer blend (containing 0.0018% sulfur by weight of the asphalt), as described below:
   ∘ 70% by weight of a sulfurized refined soy bean oil reacted with 7.0% by weight of elemental sulfur at 175°C for 33 hrs under a Nitrogen sparge. This resulted in a modifier with 70.0% oligomers, blended back with refined SBO to a 45% oligomer content (VSBO45).
   ∘ 30% by weight of Styrene-Butadiene Styrene (Kraton D-1192)
   ∘ The VSBO45 was heated to 195°C under light agitation at which point the D-1192 SBS was gradually added and continued to be reacted for 60 minutes after which the reacted blend was cooled.

Blending Procedure:
1. The oil was blended into the asphalt after the binder had been annealed at 150°C for 1 hour (Blend A only). The modified binder heated to about 193°C for polymer modification.
2. The RPM in the high shear mixer was set to 1000 while the SBS was added (within 1 minute). Immediately after addition of the polymer the RPM was briefly ramped up to 3000 rpm for approximately 10 minutes to insure full break down of the SBS pellets, after which the shear level was lowered to 1000 rpm.
3. Polymer blending was continued at 1000 rpm for a total of 2 hrs.
4. If a cross linker step is needed (Blends A and B), the temperature was dropped to about 182°C at a 150 rpm at which point the sulfur cross linker was added. Blending was continued at 182°C and 150 rpm for 2 hrs.
5. Samples were taken from the Polymer modified binder before and after it was placed in an oven at 150°C for curing for approximately 12 hrs (overnight) to achieve full swelling of the polymer.
**Multiple Stress Creep and Recovery tests were performed on the unaged binder at 34°C in accordance to AASHTO T350. Details are shown in**

### Table 6:

**Table 6**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +6.0%(RCO-SBS 70:30) | **No** | No | 2 hours | 0.30 | 0.13 | 27.70 |
| PG64-22 +6.0%(VSBO45-SBS 70:30) | **No** | No | 1 hour | 0.30 | 0.08 | 35.26 |
| | **No** | Yes | | 0.30 | 0.07 | 39.33 |

The results show a difference between the thermoplastic polymer-oil blend in which the sulfur was added separately to the asphalt blend, and the reacted thermoplastic polymer blend based on the use of a sulfurized vegetable oil. The unreacted thermoplastic blend did not achieve the same elasticity and performance of that of the reacted blend, and the later addition of the corsslinker into the bitumen did not overcome this difference in performance. It should be noted that the source of the biorenewable oil was also different between Blend A and B, the effect of which cannot be dismissed. However, the general trend of the results highlight the preference of the use of the reactive sulfur in the sulfurized vegetable based oil as the preferred method of attaining a reacted thermoplastic polymer and biorenewable oil blend.

A significant increase in elasticity and creep stiffness (reduction in creep compliance) was observed with the use of the reacted vegetable oil-SBS thermoplastic polymer in place of conventional SBS modification, even though the SBS content of the asphalt binders remained unchanged. Furthermore, use of the reacted vegetable oil-SBS thermoplastic polymer eliminated the need for adding a separate cross linker. This can significantly improve and simplify the modification process for the end user, as the use of three additives (oil, SBS, and sulfur) is reduced to a single step modification with enhanced performance that only required less than half of the blend time of conventional blends.

### Reference Example 7: Comparison of Blending Conditions for Unreacted Vegetable-based Thermoplastic Polymers:

Three polymer modified asphalt blends were compared in which unreacted SBS-vegetable based oil was used as a thermoplastic polymer replacement and the only additive. Blend conditions were varied in the Blends A, B, and C in terms of shearing and blending temperature as well as addition of a cross linker.

Blend A is a modified asphalt binder that was manually homogenized at 175°C for 1 minute, comprising:
- 94.0% neat asphalt binder graded as PG64-22 (PG 65.7-24.9) by weight of the blend.
- 6% of a reacted thermoplastic polymer blend, as described below:
   ∘ 50% by weight of RCO.
   ∘ 50% by weight of Styrene-Butadiene Styrene (Kraton D-1192)
   ∘ The RCO was heated to 195°C under light agitation at which point the D-1192 SBS was gradually added and continued for 2 hrs

Blend B is a modified asphalt binder that was high shear blended at 193°C for 2 hrs, comprising:
- 94.0% neat asphalt binder graded as PG64-22 (PG 65.7-24.9) by weight of the blend.
- 6% of a reacted thermoplastic polymer, as described below:
   ∘ 50% by weight of RCO.
   ∘ 50% by weight of Styrene-Butadiene Styrene (Kraton D-1192)
   ∘ The RCO was heated to 195°C under light agitation at which point the D-1192 SBS was gradually added and continued for 2 hrs

Blend C is a modified asphalt binder that was high shear blended at 193°C for 2 hrs, comprising:
- 93.95% neat asphalt binder graded as PG64-22 (PG 65.7-24.9) by weight of the blend.
- 6% of a reacted thermoplastic polymer, as described below:
   ∘ 50% by weight of RCO.
   ∘ 50% by weight of Styrene-Butadiene Styrene (Kraton D-1192)
   ∘ The RCO was heated to 195°C under light agitation at which point the D-1192 SBS was gradually added and continued for 2 hrs
- 0.05% by weight of elemental sulfur added as a cross-linker.
**Multiple Stress Creep and Recovery tests were performed on the imaged binder at 34°C in accordance to AASHTO T350. Details are shown in**

### Table 7:

**Table 7**

| Binder Name | Blend Conditions | | | | Jₙᵣ at 34°C, 3.2 kPa | %Recovery at 34°C, 3.2 kPa |
|---|---|---|---|---|---|---|
| | Cross-linker Added | 12hr Curing | Blend Time | SBS/Oil Ratio | | |
| PG64-22 +6.0%(RCO-SBS 50:50) - Hand Blended at 175°C | No | No | 2 hours | 0.50 | 0.10 | 29.45 |
| PG64-22 +6.0%(RCO-SBS 50:50) - High Shear Blended | No | No | 2 hours | 0.50 | 0.08 | 32.88 |
| PG64-22 +6.0%(RCO-SBS 50:50) + 0.05%S - High Shear Blended | Yes | Yes | 2 hours | 0.50 | 0.05 | 49.12 |

The results highlight a few important aspects:
- It was possible to get partial performance from the thermoplastic polymer by blending at 175°C at very low shear levels. With conventional SBS modification, it is often not possible to get polymer elasticity at temperatures lower than approximately 185°C and without high shear blending to initially break down the polymer.
- The unreacted thermoplastic polymer blend (Blend C) did not exhibit the full performance exhibited by the conventional polymer modification.
- Addition of sulfur to the asphalt blend containing the unreacted thermoplastic polymer significantly enhanced the performance beyond that of the conventional modification without a cross-linker.
- It is noted as a reminder that example 6 showed that sulfur reaction through the use of the active sulfur in the sulfurized vegetable oils resulted in the highest performing thermoplastic polymer.

### Reference Example 8: Modified Vegetable Oil Based Thermoplastic Plastomeric Polymer (MVOTPP)

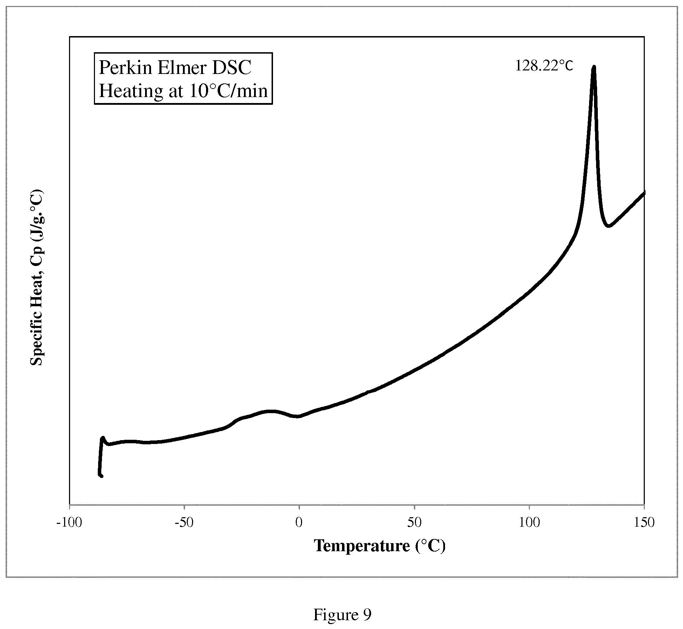

A modified asphalt binder comprising:
- 96.5% by weight of neat asphalt binder graded as PG58-28 (PG 62.1-29.9)
- 4.5% by weight of a blend comprising:
   ∘ 78% by weight of a functionalized Polyolefin (Titan 7686).
   ∘ 22% by weight of Cobalt Catalyzed (500 ppm) Blown Recovered Corn Oil, reacted at 115°C for 9 hrs and having a 24% oligomer content.
   ∘ The polymerized oil was heated to 130°C under light agitation at which point the oxidized polyethylene was gradually added. The reaction was continued for 1 hr. The end product (referred to herby as MVOTPP) was a soft brittle solid that was easily flaked. Figure 9 shows the thermal analysis results for the end product.
   **The modifier was blended into the asphalt after the binder had been annealed at 150°C for 1 hour. Performance grade tests were performed in accordance to AASHTO M320. The modification resulted in a 4.7°C low temperature grade improvement. The net change in the high and low performance grade resulted in a very significant 1.9°C: improvement in the Useful Temperature Interval. Details are shown in**

### Table 8:

**Table 8**

| Binder Name | UTI | O-DSR | R-DSR | S-BBR | m-BBR |
|---|---|---|---|---|---|
| | °C | °C | °C | °C | °C |
| Unmodified | 92.0 | 62.14 | 62.88 | -29.9 | -29.9 |
| +4.5% MVOTPP | 93.8 | 59.18 | 59.53 | -34.6 | -36.9 |

The thermoplastic plastomeric polymer based on the incorporation of the blown recovered corn oil modifier achieved one low temperature grade improvement while still passing the PG58 high temperature grade specification. This is a significant achievement, as end users will almost exclusively need to use two modifiers to achieve the low temperature grade improvement while maintaining the base high temperature grade.

### Reference Example 9: Modified Vegetable Oil Based Thermoplastic Plastomeric Polymer (MVOTPP#1)

The thermoplastic polymer described in Reference Example 8 (MVOTPP#1) was compared to the unmodified neat asphalt and asphalt only modified with the Titan 7686 Oxidized Polyethylene.
- The dosage of the MVOTPP#1 was 4.5% by weight of the modified asphalt.
- The dosage of the functionalized polyolefin (Titan 7686) was 1% (equivalent to the dosage used in the MVOTPP#1, based on the reaction charges).

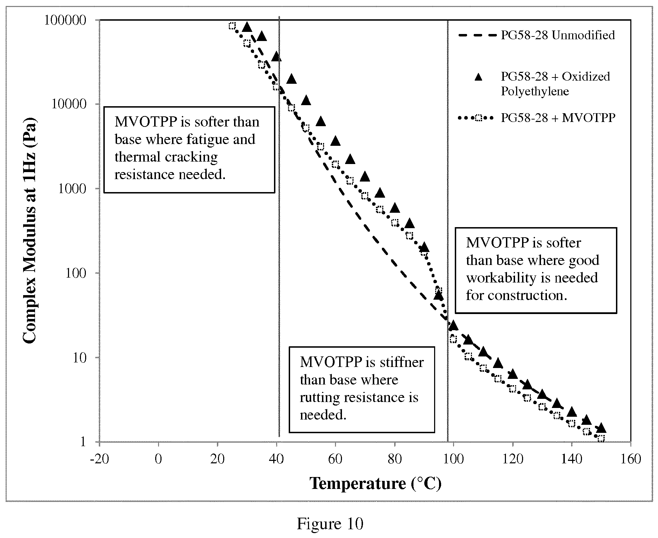

Using a dynamic shear rheometer a step-wise temperature sweep was performed on each of the described binders. A concentric cylinder geometry was used to facilitate accurate measurements at high temperatures and low viscosities. The temperature was ramped up between 15 and 150°C. At 5°C increments a 10 minute equilibration time step was defined, followed by loading at 1 Hz at a 1% strain amplitude from which the complex modulus was derived over the range of temperature steps. The results are shown in Figure 10.

The results shown in Figure 10 highlight an important aspect of the MVOTPP, namely the ideal effect on the base asphalt modulus across the temperature range of interest in asphalt applications:
- At temperatures between 100 and 150°C, the MVOTPP#1 reduced the complex modulus and dynamic viscosity by an average of 28%. This translates to high potential for enhancing workability and compaction. Thus the MVOTPP#1 offers the benefits of a "Compaction Aid Additive" at this temperature range.
- At temperatures between 40 and 100°C, the MVOTPP#1 increased the complex modulus and dynamic viscosity by an average of 115%. Thus the MVOTPP#1 behaves as a high temperature performance grade modifier at this temperature range.
- At temperatures lower than 40°C the MVOTPP#1 reduced the complex modulus and dynamic viscosity by an average of 37% (down to the 15°C measured during this test). Thus the MVOTPP#1 offers the benefit of a low temperature modifier at this temperature range.

### Reference Example 10: Modified Vegetable Oil Based Thermoplastic Plastomeric Polymer (MVOTPP#2)

A triaminononane (TAN) stearamide was produced as a thermoplastic polymeric wax as follows: Charges were calculated so that the reaction product will achieve the desired amine and acid value (Acid value of 0-5 mg KOH/g and amine value of 0-30 mg KOH/g). The fatty material, in this case a hydrogenated distillate from the vegetable refining process, was melted in an oven and charged at a 306.43g to a 1-L flask and a condenser was setup to condense any water and fatty distillate carried over as well as water from the reaction. The fatty acid was heated to 100°C under a nitrogen sparge. Once the flask reached target temperature, TAN (58.36g) was added slowly via an addition funnel over a half hour to control the resulting exothermic reaction. The reaction was then heated to between 160°C and allowed to react until the acid value leveled within the desired range, indicating the level of fatty acid containing material consumption. The result was a thermoplastic polymer with a melting point of approximately 118°C.

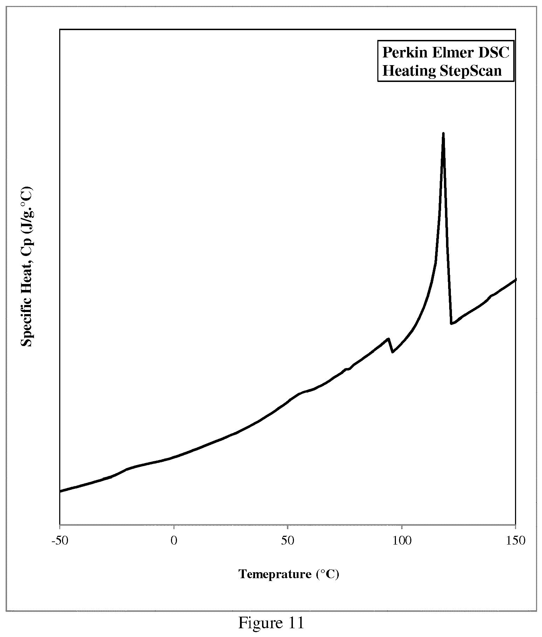

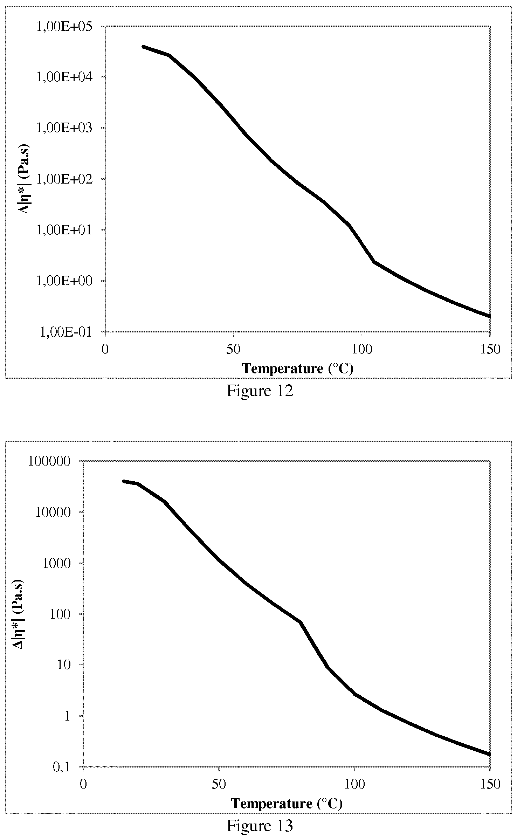

A thermoplastic polymer was added at a 3% dosage to a PG64-22 binder. Using a dynamic shear rheometer a step-wise temperature sweep was performed on each of the described binders. A concentric cylinder geometry was used to facilitate accurate measurements at high temperatures and low viscosities. The temperature was ramped up between 15 and 150°C. At 5°C increments a 10 minute equilibration time step was defined, followed by loading at 1 Hz at a 1% strain amplitude from which the complex modulus was derived over the range of temperature steps. The results are shown in Figures 11 and 12.

### Reference Example 11: Modified Vegetable Oil Based Thermoplastic Plastomeric Polymer (MVOTPP#3)

An ethylene bis-stearamide (EBS) was produced as a thermoplastic polymeric wax as follows: Charges were calculated so that the reaction product will achieve the desired amine and acid value (Acid value of 0-5 mg KOH/g and amine value of 0-30 mg KOH/g). The fatty material, in this case a hydrogenated distillate from the vegetable refining process, was melted in an oven and charged at a 402.7 to a 1-L flask and a condenser was setup to condense any water and fatty distillate carried over as well as water from the reaction. The fatty acid was heated to 100°C under a nitrogen sparge. Once the flask reached target temperature, Ethylene Diamine (47.3g) was added slowly via an addition funnel over a half hour to control the resulting exothermic reaction. The reaction was then heated to between 170°C and allowed to react until the acid value leveled within the desired range, indicating the level of fatty acid containing material consumption.

The thermoplastic polymer was added at a 3% dosage to a PG64-22 binder. The thermoplastic polymer was produced as described below:
∘ 50% by weight of an Ethylene Bis-stearamide (EBS).
∘ 50% by weight of a refined soybean oil.
∘ The oil was heated to 130°C under light agitation at which point the EBS was gradually added. The reaction was continued for 1 hr. The end product (referred to herby as MVOTPP#3) was a soft brittle solid that was easily flaked.

Using a dynamic shear rheometer a step-wise temperature sweep was performed on each of the described binders. A concentric cylinder geometry was used to facilitate accurate measurements at high temperatures and low viscosities. The temperature was ramped up between 15 and 150°C. At 5°C increments a 10 minute equilibration time step was defined, followed by loading at 1 Hz at a 1% strain amplitude from which the complex viscosity was derived over the range of temperature steps. The results are shown in Figure 13.

## Claims

1. An asphalt modifier, comprising a biorenewable oil and a thermoplastic polymer, wherein the thermoplastic polymer comprises about 1-75 wt% with a remaining balance of a biorenewable oil,
wherein the biorenewable oil is soybean oil,
wherein the biorenewable oil is at least partially sulfurized, and
wherein the thermoplastic polymer is a styrene-butadiene block copolymer.

2. The asphalt modifier of claim 1, wherein the biorenewable oil is partially or fully hydrogenated oils, oils with conjugated bonds, or bodied oils wherein a heteroatom is not introduced.

3. The asphalt modifier of claim 1, wherein the biorenewable oil is a previously modified, polymerized, or functionalized oil.

4. The asphalt modifier of claim 1, further comprising a cross-linking agent.

5. The asphalt modifier of claim 4, wherein the cross-linking agent is a sulfur containing compound and a compound selected from the group consisting of peroxide, polyphosphoric acid, and super acid catalysts.

6. The asphalt modifier of claim 1, wherein the bioreneweable oil is cationically polymerized or wherein the biorenewable oil is polymerized through oxidation, super acid catalysis, bodying, or sulfurization, or a combination thereof.

7. Use of the asphalt modifier of one or more of the preceding claims in asphalt applications such as compaction aid additives, rheology modifiers for enhanced high and low temperature asphalt performance, rheology modifier with enhanced storage stability, rheology modifier with enhanced oxidative aging stability, compaction aid additive rheology modifier for enhanced low temperature performance while minimizing reduction in modulus at high temperature performance ranges, rejuvenator agent, recycling agent, and any combination thereof, or in hot mix, warm mix, and cold mix asphalt applications, roofing asphalt, and coatings.

8. A modified asphalt, comprising:
an asphalt binder in an amount ranging from about 60-99.9 wt%; and
an asphalt modifier of one or more of the preceding claims in an amount ranging from about 0.1-40 wt%.

9. A method of making a modified asphalt, comprising simultaneously or individually blending an at least partially sulfurized biorenewable oil and a thermoplastic polymer into an asphalt binder, wherein the at least partially sulfurized biorenewable oil and the thermoplastic polymer together are an asphalt modifier,
wherein the modified asphalt is the modified asphalt according to claim 8.

## Patentansprüche

1. Asphaltmodifizierer, umfassend ein biologisch erneuerbares Öl und ein thermoplastisches Polymer, wobei das thermoplastische Polymer zu etwa 1-75 Gew.-% mit einem verbleibenden Rest ein biologisch erneuerbares Öl umfasst,
wobei das biologisch erneuerbare Öl Sojaöl ist,
wobei das biologisch erneuerbare Öl mindestens teilweise geschwefelt ist und
wobei das thermoplastische Polymer ein Styrol-Butadien-Block-Copolymer ist.

2. Asphaltmodifizierer nach Anspruch 1, wobei das biologisch erneuerbare Öl teilweise oder vollständig hydrierte Öle, Öle mit konjugierten Bindungen oder eingedickte Öle beträgt, wobei ein Heteroatom nicht eingeführt wird.

3. Asphaltmodifizierer nach Anspruch 1, wobei das biologisch erneuerbare Öl ein zuvor modifiziertes, polymerisiertes oder funktionalisiertes Öl ist.

4. Asphaltmodifizierer nach Anspruch 1, ferner umfassend ein Vernetzungsmittel.

5. Asphaltmodifizierer nach Anspruch 4, wobei das Vernetzungsmittel eine schwefelhaltige Verbindung und eine Verbindung beträgt, die aus der Gruppe ausgewählt ist, bestehend aus Peroxid, Polyphosphorsäure und Supersäurekatalysatoren.

6. Asphaltmodifizierer nach Anspruch 1, wobei das biologisch erneuerbare Öl kationisch polymerisiert ist oder wobei das biologisch erneuerbare Öl durch Oxidation, Supersäurekatalyse, Eindicken oder Schwefelung oder einer Kombination davon polymerisiert wird.

7. Verwendung des Asphaltmodifizierers nach einem oder mehreren der vorstehenden Ansprüche in Asphaltanwendungen, wie Verdichtungshilfsadditiven, Rheologiemodifizierern für eine verbesserte Hochtemperatur- und Niedrigtemperaturasphaltleistung, einem Rheologiemodifizierer mit verbesserter Stabilität einer oxidativen Alterung, einem Verdichtungshilfsadditivrheologiemodifizierer für eine verbesserte Niedrigtemperaturleistung während eine Reduzierung in einem Modul bei Hochtemperaturleistungsbereichen minimiert wird, einem Verjüngungsmittel, einem Recyclingmittel und einer beliebigen Kombination davon oder in Heißmischungs-, Warmmischungs- und Kaltmischungsasphaltanwendungen, Dachasphalt und Beschichtungen.

8. Modifizierter Asphalt, umfassend:
ein Asphaltbindemittel in einer Menge, die von etwa 60-99,9 Gew.-% reicht; und
einen Asphaltmodifizierer nach einem oder mehreren der vorstehenden Ansprüche in einer Menge, die von etwa 0,1 bis 40 Gew.-% reicht.

9. Verfahren zum Herstellen eines modifizierten Asphalts, umfassend gleichzeitiges oder individuelles Vermengen eines mindestens teilweise geschwefelten biologisch erneuerbaren Öls und eines thermoplastischen Polymers in ein Asphaltbindemittel, wobei das mindestens teilweise geschwefelte biologisch erneuerbare Öl und das thermoplastische Polymer zusammen ein Asphaltmodifizierer sind,
wobei der modifizierte Asphalt der modifizierte Asphalt nach Anspruch 8 ist.

## Revendications

1. Modificateur d'asphalte, comprenant une huile biorenouvelable et un polymère thermoplastique, le polymère thermoplastique constituant environ 1 à 75 % en poids, avec un solde restant d'une huile biorenouvelable,
l'huile biorenouvelable étant de l'huile de soja,
l'huile biorenouvelable étant au moins partiellement sulfurée, et
le polymère thermoplastique étant un copolymère séquencé de styrène-butadiène.

2. Modificateur d'asphalte selon la revendication 1, l'huile biorenouvelable étant des huiles partiellement ou complètement hydrogénées, des huiles avec des liaisons conjuguées, ou des huiles épaissies dans lesquelles un hétéroatome n'est pas introduit.

3. Modificateur d'asphalte selon la revendication 1, dans lequel l'huile biorenouvelable est une huile précédemment modifiée, polymérisée, ou fonctionnalisée.

4. Modificateur d'asphalte selon la revendication 1, comprenant en outre un agent de réticulation.

5. Modificateur d'asphalte selon la revendication 4, dans lequel l'agent de réticulation est un composé contenant du soufre et un composé choisi dans le groupe constitué par peroxyde, acide polyphosphorique, et catalyseurs super acides.

6. Modificateur d'asphalte selon la revendication 1, dans lequel l'huile biorenouvelable est cationiquement polymérisée ou dans lequel l'huile biorenouvelable est polymérisée par oxydation, catalyse par super acide, épaississement, ou sulfuration, ou une combinaison de ceux-ci.

7. Utilisation du modificateur d'asphalte selon une ou plusieurs des revendications précédentes dans des applications d'asphalte telles qu'additifs d'aide au compactage, modificateurs de rhéologie pour une performance améliorée d'asphalte à haute et basse température, modificateur de rhéologie avec une stabilité améliorée au vieillissement oxydant, modificateur de rhéologie d'additif d'aide au compactage pour une performance améliorée à basse température tout en minimisant une réduction de module à des plages de performance à haute température, agent de rénovation, agent de recyclage, et n'importe quelle combinaison de ceux-ci, ou dans des applications d'asphalte en mélange à chaud, en mélange tiède et en mélange à froid, de l'asphalte de toiture, et des revêtements.

8. Asphalte modifié, comprenant :
un liant d'asphalte en une quantité allant d'environ 60 à 99,9 % en poids ; et
un modificateur d'asphalte selon une ou plusieurs des revendications précédentes en une quantité allant d'environ 0,1 à 40 % en poids.

9. Procédé de fabrication d'un asphalte modifié, comprenant le mélange simultané ou individuel d'une huile biorenouvelable au moins partiellement sulfurée et d'un polymère thermoplastique dans un liant d'asphalte, l'huile biorenouvelable au moins partiellement sulfurée et le polymère thermoplastique étant ensemble un modificateur d'asphalte,
l'asphalte modifié étant l'asphalte modifié selon la revendication 8.
